# EUROPEAN PATENT SPECIFICATION

(11) **EP 2 316 707 B1**
(45) Date of publication and mention of the grant of the patent: **02.10.2013**
(21) Application number: 09809567.2
(22) Date of filing: 26.08.2009
(51) Int. Cl.: B62D 3/12, B32B 3/10, B32B 5/28, B32B 15/082, C08K 3/04, C08K 3/22, C08K 3/30, C08K 3/32, C08K 3/34, C08L 27/18, C10M 125/02, C10M 125/06, C10M 125/26, F16C 33/20, F16H 19/04, B32B 15/04, B32B 15/08, C10M 125/00, F16H 55/28, F16H 57/04

(54) **MULTI-LAYER SLIDING MEMBER AND RACK GUIDE IN RACK-AND-PINION STEERING DEVICE FOR AUTOMOBILES USING SAME**
MEHRSCHICHTIGES GLEITELEMENT UND GESTELLFÜHRUNG IN EINER ZAHNSTANGENLENKUNG FÜR KRAFTFAHRZEUGE DAMIT
ELÉMENT COULISSANT MULTICOUCHE ET GUIDE DE CRÉMAILLÈRE D'UN DISPOSITIF DE DIRECTION À CRÉMAILLÈRE UTILISANT CET ÉLÉMENT

(30) Priority: 29.08.2008 JP 2008222154
(43) Date of publication of application: 04.05.2011
(73) Proprietor: Oiles Corporation, Tokyo 108-0075 (JP)
(72) Inventor: YANASE, Sumihide, Fujisawa-shi Kanagawa 252-0811 (JP); NAKAMARU, Takashi, Fujisawa-shi Kanagawa 252-0811 (JP); WATAI, Tadashi, Fujisawa-shi Kanagawa 252-0811 (JP); TAKAMURA, Satoshi, Fujisawa-shi Kanagawa 252-0811 (JP); YAMASHITA, Eiichi, Fujisawa-shi Kanagawa 252-0811 (JP)
(74) Representative: Jackson, Martin Peter
(86) International application number: PCT/JP2009/004149
(87) International publication number: WO 2010/023911

(56) References cited:
- EP-A1- 1 469 050
- EP-A1- 1 647 574
- EP-A2- 1 526 296
- WO-A1-2005/007741
- JP-A- 7 157 312
- JP-A- 7 166 182
- JP-A- 8 217 941
- JP-A- 2004 316 499
- JP-A- 2006 056 205

## Description

### TECHNICAL FIELD

The present invention relates to a multilayered sliding member and a rack guide in a rack-and-pinion type steering apparatus for an automobile using the same.

### BACKGROUND ART

A multilayered sliding member (refer to Patent Documents 1, 2, and 3), which is comprised of a backing plate formed of a steel plate, a porous metal sintered layer formed integrally on the surface of that backing plate, and a synthetic resin layer filled in the pores of, and coated on the surface of, the porous metal sintered layer, is widely used as a supporting means for smoothly supporting a shaft in various machine equipment in the form of a cylindrical bearing bush, i.e., a so-called wrapped bush, which is formed by being wound into a cylindrical form with the synthetic resin layer placed on the inner side or in the form of a sliding plate, or as a rack guide (refer to Patent Document 4) serving as a supporting means for smoothly supporting a rack bar in a rack-and-pinion type steering apparatus for an automobile.

Polytetrafluoroethylene resins (hereafter abbreviated as PTFE) which are used for the multilayered sliding members described in Patent Documents 1 to 3, are used extensively for sliding members such as bearings since they excel in self-lubricating properties, are low in the coefficient of friction, and have chemical resistance and heat resistance. However, since the sliding members consisting singly of the PTFE are inferior in wear resistance and load bearing capability, their drawbacks are compensated for by adding various fillers according to the application of use of the sliding members.

In Patent Document 1, lead is used as a filler for the PTFE, while, in Patent Document 2, a component selected from the group consisting of a phosphate and a barium sulfate, a component selected from the group consisting of a magnesium silicate and mica, and a component selected from the group consisting of lead, tin, a lead-tin alloy, and a mixture thereof are used.
EP-A1-1,647,574 discloses a multilayered sliding member comprising: a backing plate formed of a steel plate; a porous metal sintered layer formed integrally on a surface of said backing plate; and a sliding layer constituted of a synthetic resin composition filling pores of, and coating a surface of, said porous metal sintered layer, said synthetic resin composition being composed of 5 to 30% by weight of a barium sulfate, 1 to 15% by weight of a magnesium silicate, 1 to 25% by weight of a phosphate, and the balance of a polytetrafluoroethylene resin.

### PRIOR ART DOCUMENTS

### PATENT DOCUMENTS

Patent document 1: JP-B-31-2452
Patent document 2: JP-A-8-41484
Patent document 3: JP-B-61-52322
Patent document 4: JP-UM-B-1-27495

### SUMMARY OF THE INVENTION

### PROBLEMS TO BE SOLVED BY THE INVENTION

In multilayered sliding members which are used in various applications, lead or a lead alloy as a filler is extensively used as a filler for improving the wear resistance of the synthetic resin layer. In recent years, however, the trend of material development is heading in a direction in which lead or a lead alloy is not used as a filler in consideration of environmental problems. Because the lead or lead alloy is a substance of environmental concern, the situation is such that it is inevitable to disuse it from the standpoint of such as environmental contamination and pollution.

In Patent Document 3, instead of lead or a lead alloy, a tetrafluoroethylene-perfluoroalkylvinylether copolymer resin is used as a filler for the PTFE, but becomes possible only in the application to special usages, and is difficult to apply to, for example, the aforementioned rack guide in the rack-and-pinion type steering apparatus for an automobile in the light of load bearing capability and wear resistance.

The present invention has been devised in view of the above-described aspects, and its object is to provide a multilayered sliding member which, without using a substance of environmental concern such as lead or a lead alloy as the filler, is capable of exhibiting more excellent wear resistance and load bearing capability than a multilayered sliding member containing lead or a lead alloy, as well as a rack guide in a rack-and-pinion type steering apparatus for an automobile using the same.

### MEANS FOR OVERCOMING THE PROBLEMS

As a result of repeatedly conducting earnest studies, the present inventors found that it is possible to obtain a multilayered sliding member which exhibits more excellent wear resistance and load bearing capability than the multilayered sliding member containing lead or a lead alloy by compounding with a PTFE specific amounts of a barium sulfate, magnesium silicate, a phosphate, and a titanium oxide, and that a rack guide in a rack-and-pinion type steering apparatus for an automobile using this multilayered sliding member is capable of exhibiting excellent wear resistance and load bearing capability, thereby making it possible to allow the rack bar to slide smoothly.

The present invention has been completed on the basis of the above-described findings, and a multilayered sliding member in accordance with the present invention comprises: a backing plate formed of a steel plate; a porous metal sintered layer formed integrally on a surface of the backing plate; and a sliding layer constituted of a synthetic resin composition filling pores of, and coating a surface of, the porous metal sintered layer, the synthetic resin composition being composed of 5 to 30% by weight of a barium sulfate, 1 to 15% by weight of a magnesium silicate, 1 to 25% by weight of a phosphate, 0.5 to 3% by weight of an anatase-type titanium oxide, and the balance of a polytetrafluoroethylene resin.

The barium sulfate (BaSO₄) among the components ameliorates the wear resistance and load bearing capability, which are the drawbacks of the simple substance of the PTFE constituting a principal component. Thus, the barium sulfate possesses the action of substantially improving the wear resistance and load bearing capability. As the barium sulfate, either a sedimentary or a screened barium sulfate may be used. Such a barium sulfate is commercially available, for example, from Sakai Chemical Industry Co., Ltd. and is easily obtainable. An average particle size of the barium sulfate which is used is not more than 10 µm, preferably 1 to 5 µm. The amount of the barium sulfate compounded is 5 to 30% by weight, preferably 5 to 20% by weight, and more preferably 10 to 15% by weight. If the compounding amount is less than 5% by weight, it is difficult to obtain the effect of improving the wear resistance and load bearing capability of the PTFE, whereas if the compounding amount exceeds 30% by weight, the wear resistance can be aggravated.

Since the magnesium silicate has a laminar structure in terms of its crystalline structure and is hence easily sheared, the magnesium silicate has an effect of sufficiently exhibiting the low friction characteristic which is a property peculiar to the PTFE and of improving the wear resistance. As the magnesium silicate, one is suitably used which contains normally not less than 40.0% by weight of a silicon dioxide (SiO₂) and normally not less than 10.0% by weight of a magnesium dioxide (MgO), in which the weight ratio of the silicon dioxide to the magnesium oxide is normally 2.1 to 5.0, and which is low in bulk and has a small specific surface area. Specifically, it is possible to cite, by way of example, 2MgO · 3SiO₂ · nH₂O, 2MgO · 6SiO₂ · nH₂O, and the like. If the weight ratio of the silicon dioxide to the magnesium oxide is less than 2.1 or exceeds 5.0, the low friction characteristic and wear resistance of the PTFE are aggravated.

The compounding amount of the magnesium silicate is 1 to 15% by weight, preferably 3 to 13% by weight, more preferably 3 to 10% by weight. If the compounding amount is less than 1% by weight, the above-described effects are not sufficiently exhibited, whereas if the compounding amount exceeds 15% by weight, the effects of the PTFE in improving the wear resistance and load bearing capability owing to the aforementioned compounding of the barium sulfate are impaired.

The phosphate is not a substance which in itself exhibits lubricity as in graphite and molybdenum disulfide, but by being compounded with the PTFE, the phosphate exhibits an effect of promoting the film formability of a lubricating film of the PTFE on the surface (sliding friction surface) of a mating member in sliding with the mating member.

As the phosphate, it is possible to cite metal salts of such as orthophosphoric acid, pyrophosphoric acid, phosphorous acid, and metaphosphoric acid, and a mixture thereof. Among them, the metal salts of pyrophosphoric acid and metaphosphoric acid are preferable. As the metal, an alkali metal and an alkaline earth metal are preferable, and lithium (Li), calcium (Ca), and magnesium (Mg) are more preferable. Specifically, it is possible to cite, by way of example, lithium phosphate tribasic (Li₃PO₄), lithium pyrophosphate (Li₄P₂O₇), calcium pyrophosphate (Ca₂P₂O₇), magnesium pyrophosphate (Mg₂P₂O₇), lithium metaphosphate (LiPO₃), calcium metaphosphate (Ca(PO₃)₂), magnesium metaphosphate ([Mg(PO₃)₂]ₙ), and the like. Among them, magnesium metaphosphate is preferable.

As for the phosphate, by compounding a small amount, e.g., 1% by weight, with the PTFE, the effect of promoting the film formability of a lubricating film of the PTFE on the surface of the mating member starts to appear, and this effect is maintained up to 25% by weight. However, if the phosphate is compounded in excess of 25% by weight, the amount of the lubricating film formed on the surface of the mating member becomes excessively large, causing the wear resistance to decline to the contrary. Therefore, the compounding amount of the phosphate is 1 to 25% by weight, preferably 5 to 20% by weight, and more preferably 10 to 15% by weight.

The titanium oxide (TiO₂) exhibits an effect of further improving the wear resistance of the PTFE. Among titanium oxides, depending on the shape of crystals, there are three types, i.e., the rutile type and the anatase type, both of a tetragonal system, and a brookite type of an orthorhombic system, but the tetragonal anatase type is used in the present invention. As this titanium oxide of the anatase type, one which exhibits a Mohs hardness of 5.5 to 6.0 and whose average particle size is not more than 10 mµ, particularly not more than 5 µm, is preferably used. The compounding amount of the titanium oxide is 0.5 to 3% by weight, preferably 0.5 to 2% by weight, and more preferably 1 to 1.5% by weight. If the compounding amount of the titanium oxide is less than 0.5% by weight, the effect of improving the wear resistance of the PTFE does not appear, whereas if the compounding amount exceeds 3% by weight, there is a possibility of damaging the surface of the mating member in sliding with the mating member.

As the PTFE constituting the principal component of the resin layer of the multilayered sliding member, a PTFE which is used mainly for molding as a molding powder or a fine powder is used. As the molding powder, it is possible to cite "Teflon (registered trademark) 7-J (tradename)," "Teflon (registered trademark) 70-J (tradename)," or the like manufactured by Du Pont-Mitsui Fluorochemicals Co., Ltd., "POLYFLON (registered trademark) M-12 (tradename)" or the like manufactured by Daikin Industries, Ltd., and "Fluon (registered trademark) G163 (tradename)," "Fluon (registered trademark) G190 (tradename)," or the like manufactured by Asahi Glass Co., Ltd. As the PTFE for the fine powder, it is possible to cite "Teflon (registered trademark) 6CJ (tradename)" or the like manufactured by Du Pont-Mitsui Fluorochemicals Co., Ltd., "POLYFLON (registered trademark) F201 (tradename)" or the like manufactured by Daikin Industries, Ltd., and "Fluon (registered trademark) CD076 (tradename)," "Fluon (registered trademark) CD090 (tradename)," or the like manufactured by Asahi Glass Co., Ltd.

The compounding amount of the PTFE in the synthetic resin composition for forming the sliding layer is the remaining amount obtained by subtracting the compounding amounts of the fillers from the amount of the resin composition, and is preferably not less than 50% by weight, more preferably 50 to 75% by weight.

As additional component(s), a solid lubricant and/or a low molecular weight PTFE may be added to the synthetic resin composition for forming the sliding layer of the multilayered sliding member of the invention so as to further improve the wear resistance.

As the solid lubricants, it is possible to cite graphite, molybdenum disulfide, and the like. The compounding amount of the solid lubricant is 0.1 to 2% by weight, preferably 0.5 to 1% by weight. These solid lubricants may be used singly or by mixing two or more kinds.

The low molecular weight PTFE is a PTFE whose molecular weight is lowered by cracking a high molecular weight PTFE (molding powder or fine powder mentioned above) by such as exposure to radiation or by adjusting the molecular weight during the polymerization of the PTFE. Specifically, it is possible to cite "TLP-10F (tradename)" or the like manufactured by Du Pont-Mitsui Fluorochemicals Co., Ltd., "Lubron L-5 (tradename)" or the like manufactured by Daikin Industries, Ltd., "Fluon L169J (tradename)" or the like manufactured by Asahi Glass Co., Ltd., and "KTL-8N (tradename)" or the like manufactured by KITAMURA LIMITED. The compounding amount of the low molecular weight PTFE is 1 to 10% by weight, preferably 2 to 7% by weight.

Next, a description will be given of a method of manufacturing a multilayered sliding member including the steel backing plate, the porous metal sintered layer formed integrally on the surface of this steel backing plate, and the sliding layer constituted of a synthetic resin composition filled in the pores of, and coated on the surface of, the porous metal sintered layer.

As the steel backing plate, a rolled steel plate for general structure is used. As for the steel plate, it is preferable to use a continuous strip which is provided as a hoop wound in coil form. However, the steel plate is not necessarily limited to the continuous strip, and a strip which is cut to an appropriate length may also be used. These strips may be provided with such as copper plating or tin plating, as required, so as to improve corrosion resistance. The thickness of the steel plate as the steel backing plate should preferably be 0.5 to 1.5 mm, in general.

As a metal powder for forming the porous metal sintered layer, a powder of a copper alloy is used which generally passes a 100-mesh sieve, such as bronze, lead bronze, or phosphor bronze, wherein the metal itself excels in friction and wear characteristics. Depending on usage, however, it is also possible to use a powder of such as an aluminum alloy or iron other than the copper alloy. In terms of the particulate form of this metal powder, it is possible to use a metal powder having massive shape, spherical shape, or other irregular shapes. This porous metal sintered layer should be such that the respective metal powders are firmly bonded to each other and to the strip of the aforementioned steel plate or the like, and should have a fixed thickness and a required porosity. The thickness of this porous metal sintered layer is preferably 0.15 to 0.40 mm, particularly 0.2 to 0.3 mm. The porosity is recommended to be generally not less than 10% by volume, particularly 15 to 40% by volume.

As for the synthetic resin composition for forming the sliding layer of the multilayered sliding member, a resin composition with wettability imparted thereto can be obtained by a method in which the PTFE and the aforementioned fillers are mixed, and a petroleum-based solvent is then added to the resultant mixture and is mixed under stirring. The mixing of the PTFE and the fillers is effected at a temperature not more than the room-temperature transition point (19°C) of the PTFE, preferably from 10 to 18°C. Further, the resultant mixture and the petroleum-based solvent are also mixed under stirring at the same temperature as described above. By the adoption of such a temperature condition, fibrillation of the PTFE can be inhibited, thereby making it possible to obtain a homogeneous mixture.

As the petroleum-based solvent, naphtha, toluene, xylene, or a mixed solvent of an aliphatic solvent or a naphthenic solvent is used. The ratio of the petroleum-based solvent used is from 15 to 30 parts by weight based on 100 parts by weight of the mixture of the PTFE powder and the fillers. If the ratio of the petroleum-based solvent used is less than 15 parts by weight, the ductility of the synthetic resin composition with the wettability imparted thereto is poor in the below-described filling and coating step of the porous metal sintered layer, with the result that uneven filling and coating of the sintered layer is likely to occur. On the other hand, if the ratio of the petroleum-based solvent used exceeds 30 parts by weight, not only does the filling and coating operation become difficult, but the uniformity of the coating thickness of the synthetic resin composition can be impaired, and the adhesion between the synthetic resin composition and the sintered layer becomes deteriorated.

The multilayered sliding member in accordance with the present invention is produced through the following steps (a) to (d).

(a) A synthetic resin composition with wettability imparted thereto is supplied to and spread over the surface of a porous metal sintered layer formed on the surface of a backing plate formed of a thin steel plate, and is subjected to rolling by a roller, thereby filling the synthetic resin composition into the porous metal sintered layer and forming on the surface of the porous metal sintered layer a coating layer serving as the sliding layer constituted of the synthetic resin composition having a uniform thickness. In this step, the thickness of the coating layer serving as the sliding layer is set to from 2 to 2.2 times the sliding layer thickness required for the synthetic resin composition in a final product. The filling of the resin composition into pores of the porous metal sintered layer substantially proceeds in this step.

(b) The backing plate thus treated in the step (a) is held in a drying furnace heated to a temperature of from 200 to 250°C for several minutes to remove the petroleum-based solvent. Then, the dried synthetic resin composition is subjected to pressure roller treatment using a roller under a pressure of 29.4 to 58.8 MPa (300 to 600 kgf/cm²) to obtain a predetermined thickness.

(c) The backing plate thus treated in the step (b) is introduced into a heating furnace, and heated at a temperature of from 360 to 380°C for a period between several minutes and 10 and several minutes to effect sintering. Then, the backing plate is removed out of the heating furnace and is subjected to roller treatment again to adjust the variation of the size.

(d) The backing plate subjected to the size adjustment in the step (c) is cooled (air-cooled or naturally cooled), and then subjected to correction roller treatment, as required, so as to correct the waviness or the like of the backing plate, thereby obtaining a desired sliding member.

In the multilayered sliding member obtained through the steps (a) to (d), the thickness of the porous metal sintered layer is set to 0.10 to 0.40 mm, and the thickness of the coating layer formed of the synthetic resin composition and serving as the sliding layer is set to 0.02 to 0.15 mm. The sliding member thus obtained is cut into an appropriate size, and is used as a sliding plate in the state of a flat plate, or used as a cylindrical wrapped bush by being bent round.

In an embodiment, there is provided a rack guide for slidably supporting a rack bar in a rack-and-pinion type steering apparatus which includes a gear case, a pinion supported rotatably by said gear case, a rack bar on which rack teeth meshing with said pinion are formed, and a spring for pressing said rack guide toward said rack bar, the rack guide, comprising: a rack guide base body having a cylindrical outer peripheral surface which is slidably brought into contact with a cylindrical inner peripheral surface of said gear case; and said multilayered sliding member according to the invention which is secured on a backing plate side thereof to said rack guide base body, wherein said multilayered sliding member has on said sliding layer a recessed surface which is slidably brought into sliding contact with an outer peripheral surface of said rack bar so as to slidably support said rack bar.

In the present invention, the rack guide base body may have a circular arc-shaped recessed surface and may have a circular hole in a center of a bottom portion of the circular arc-shaped recessed surface, and the multilayered sliding member may have a circular arc-shaped recessed surface on the sliding layer thereof, and may have a hollow cylindrical projecting portion which is formed in a center of a bottom portion of the circular arc-shaped recessed surface in such a manner as to extend from the bottom portion toward the backing plate side.

The multilayered sliding member, which has the recessed surface of a circular arc shape complementary to that of the circular arc-shaped recessed surface of the rack guide base body, is seated on the circular arc-shaped recessed surface of the rack guide base body such that the hollow cylindrical projecting portion projecting from the rear surface of the circular arc-shaped recessed surface is fitted to the circular hole formed in the center of the bottom portion of the circular arc-shaped recessed surface of the rack guide base body, to thereby form the rack guide in which the multilayered sliding member is secured to the rack guide body.

In the present invention, the rack guide base body may have a recessed surface including a mutually opposing pair of flat surfaces, a pair of inclined surfaces respectively extending integrally from the pair of flat surfaces in a mutually opposing manner, and a bottom flat surface extending integrally from the pair of flat surfaces, and may have a circular hole formed in a center of a bottom portion of the recessed surface. Further, the multilayered sliding member may have a mutually opposing pair of inclined surface portions, a pair of flat surface portions respectively continuous from the inclined surface portions, a bottom surface portion continuous to each of the flat surface portions, and a hollow cylindrical projecting portion which is formed in a center of the bottom surface portion in such a manner as to extend toward the backing plate side.

The multilayered sliding member, which has the mutually opposing pair of inclined surface portions, the pair of flat surface portions respectively continuous from the inclined surface portions, the bottom surface portion continuous to each of the flat surface portions, and the hollow cylindrical projecting portion formed in a center of the bottom surface portion in such a manner as to extend toward the backing plate side, is seated on the recessed surface of the rack guide base body such that the projecting portion at the center of the bottom surface portion is fitted to the hole in the center of the bottom portion of the recessed surface of the rack guide base body, to thereby form the rack guide in which the multilayered sliding member is secured to the rack guide body.

### ADVANTAGES OF THE INVENTION

According to the present invention, it is possible to provide a multilayered sliding member which does not contain a substance of environmental concern such as lead and is yet capable of exhibiting more excellent wear resistance and load bearing capability than a multilayered sliding member containing lead or the like, as well as a rack guide in a rack-and-pinion type steering apparatus for an automobile using the multilayered sliding member.

### BRIEF DESCRIPTION OF THE DRAWINGS

Fig. 1 is a cross-sectional view of a multilayered sliding member in accordance with a preferred embodiment of the present invention;
Fig. 2 is a cross-sectional view illustrating a rack-and-pinion type steering apparatus;
Fig. 3 is a cross-sectional view, taken along line III - III shown in Fig. 4, of a rack guide using the multilayered sliding member in accordance with the present invention;
Fig. 4 is a plan view of the rack guide shown in Fig. 3;
Fig. 5 is a cross-sectional view, taken along line V - V shown in Fig. 6, of another rack guide using the multilayered sliding member in accordance with the present invention; and
Fig. 6 is a plan view of the rack guide shown in Fig. 5.

### MODE FOR CARRYING OUT THE INVENTION

Hereafter, a detailed description will be given of the present invention on the basis of examples. However, these examples are merely illustrative and not intended to limit the invention thereto.

### EXAMPLES

### Examples 1 to 5

Screened barium sulfate (manufactured by Sakai Chemical Industry Co., Ltd.) as a barium sulfate, heavy magnesium silicate (manufactured by Kyowa Chemical Industry Co. Ltd.) in which SiO₂/MgO is 2.2 as a magnesium silicate, magnesium metaphosphate as a phosphate, anatase-type titanium oxide of a tetragonal system as a titanium oxide, and PTFE for fine powder ("POLYFLON (registered trademark) F201 (tradename)" manufactured by Daikin Industries, Ltd.) as a PTFE were prepared, and synthetic resin compositions shown in Table 2 were each charged into a Henschel mixer and were mixed under stirring. 20 parts by weight of a mixed solvent of an aliphatic solvent and a naphthenic solvent ("Exxsol (tradename)" manufactured by Exxon Chemical Company) as a petroleum-based solvent was compounded with 100 parts by weight of the resultant mixture, and mixed at a temperature (15°C) lower than the room-temperature transition point of the PTFE, to thereby obtain a wettable synthetic resin composition.

The synthetic resin composition thus obtained was supplied to and spread over the surface of a porous metal (bronze) sintered layer (with a thickness of 0.25 mm) formed on the surface of a steel plate (with a thickness of 0.7 mm) serving as a steel backing plate, and rolled by a roller such that the thickness of the synthetic resin composition became 0.25 mm, thereby obtaining a multilayered plate in which the synthetic resin composition was filled in the pores of, and coated on the surface of, the porous metal sintered layer. This multilayered plate thus obtained was held in a hot-air drying furnace at 200°C for 5 minutes to remove the solvent. Then, the dried synthetic resin composition was rolled by a roller with a pressurizing force of 39.2 MPa (400 kgf/cm²), such that the thickness of the synthetic resin composition coated on the surface of the porous metal sintered layer was set to 0.10 mm.

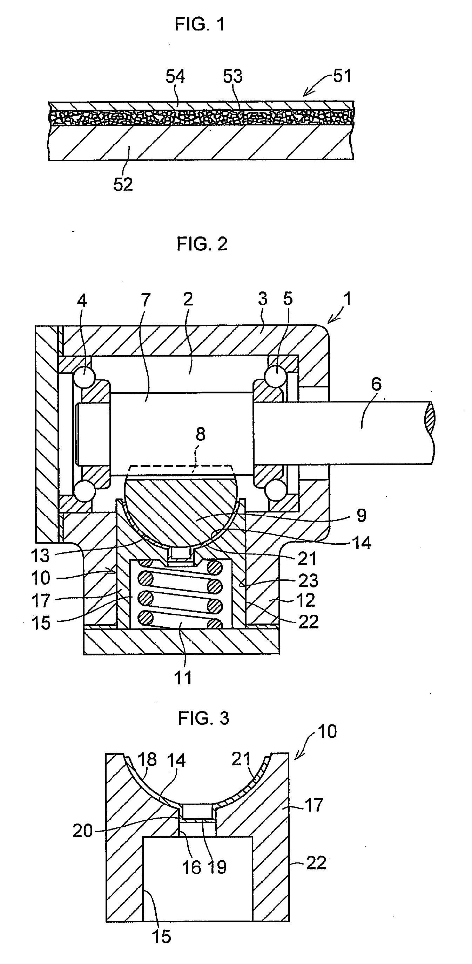

The multilayered plate thus pressure-treated was then heated and sintered in a heating furnace at a temperature of 370°C for 10 minutes, and was subsequently subjected to dimensional adjustment and correction of the waviness and the like, thereby fabricating a multilayered sliding member. Fig. 1 is a cross-sectional view of a multilayered sliding member 51 thus obtained. In the drawing, reference numeral 52 denotes a backing plate formed of a steel plate; 53 denotes a porous metal sintered layer formed integrally on the surface of the backing plate 52; and 54 denotes a sliding layer composed of the synthetic resin composition filling the pores of, and coating the surface of, the porous metal sintered layer 53. The multilayered sliding member, upon completion of the correction, was cut and subjected to bending, to thereby obtain a semicylindrical multilayered sliding member test piece having a radius of 10.0 mm, a length of 20.0 mm, and a thickness of 1.05 mm.

### Examples 6 to 10

As additional components, graphite or molybdenum disulfide as a solid lubricant and/or "Lubron L-5 (tradename)" manufactured by Daikin Industries, Ltd. as a low molecular weight PTFE were compounded with each of the synthetic resin compositions (Table 2) of Examples 1 to 3 described above to thereby fabricate synthetic resin compositions shown in Table 3. Semicylindrical multilayered sliding member test pieces each having a radius of 10.0 mm, a length of 20.0 mm, and a thickness of 1.05 mm were obtained by a method similar to that of the above-described Examples.

### Comparative Example 1

As shown in Table 4, 80% by weight of the PTFE (identical to that of the above-described Examples) and 20% by weight of a lead powder were charged into the Henschel mixer and were mixed under stirring. 20 parts by weight of the mixed solvent (identical to that of the above-described Examples) of an aliphatic solvent and a naphthenic solvent as a petroleum-based solvent was compounded with 100 parts by weight of the resultant mixture, and mixed at a temperature (15°C) lower than the room-temperature transition point of the PTFE, to thereby obtain a synthetic resin composition. Next, a semicylindrical multilayered sliding member test piece having a radius of 10.0 mm, a length of 20.0 mm, and a thickness of 1.05 mm was obtained by a method similar to that of the above-described Examples.

### Comparative Example 2

As shown in Table 4, 15% by weight of screened barium sulfate (identical to that of the above-described Examples) as a barium sulfate, 15% by weight of heavy magnesium silicate (identical to that of the above-described Examples) in which SiO₂/MgO is 2.2 as a magnesium silicate, 20% by weight of a lead powder, and the remainder consisting of PTFE for fine powder (identical to that of the above-described Example 1) as a PTFE were charged into the Henschel mixer and were mixed under stirring. 20 parts by weight of the mixed solvent (identical to that of the above-described Examples) of an aliphatic solvent and a naphthenic solvent as a petroleum-based solvent was compounded with 100 parts by weight of the resultant mixture, and mixed at a temperature (15°C) lower than the room-temperature transition point of the PTFE, to thereby obtain a synthetic resin composition. Next, a semicylindrical multilayered sliding member test piece having a radius of 10.0 mm, a length of 20.0 mm, and a thickness of 1.05 mm was obtained by a method similar to that of the above-described Examples.

### Comparative Example 3

As shown in Table 4, 10% by weight of screened barium sulfate (identical to that of the above-described Examples) as a barium sulfate, 7% by weight of heavy magnesium silicate (identical to that of the above-described Examples) in which SiO₂/MgO is 2.2 as a magnesium silicate, 10% by weight of magnesium metaphosphate as a phosphate, and the remainder consisting of PTFE for fine powder (identical to that of the above-described Example 1) as a PTFE were charged into the Henschel mixer and were mixed under stirring. 20 parts by weight of the mixed solvent (identical to that of the above-described Examples) of an aliphatic solvent and a naphthenic solvent as a petroleum-based solvent was compounded with 100 parts by weight of the resultant mixture, and mixed at a temperature (15°C) lower than the room-temperature transition point of the PTFE, to thereby obtain a synthetic resin composition. Next, a semicylindrical multilayered sliding member test piece having a radius of 10.0 mm, a length of 20.0 mm, and a thickness of 1.05 mm was obtained by a method similar to that of the above-described Examples.

Sliding characteristics were evaluated by the following test method with respect to the semicylindrical multilayered sliding member test pieces obtained in the above-described Examples 1 to 10 and Comparative Examples 1 to 3.

### Reciprocating Sliding_Test

The coefficient of friction and the amount of wear were measured under the conditions listed in Table 1. The coefficient of friction shows variable values of the coefficient of friction from one hour after the start of the test until the completion of the test. The amount of wear shows the amount of dimensional change of the sliding surface after completion of the test period (8 hours). The test results are shown in Tables 2 to 4.

**(Table 1)**

| | |
|---|---|
| Sliding velocity: | 3 m/min |
| Load: | 200 kgf |
| Test period: | 8 hrs. |
| Lubrication: | Mineral oil-based grease ["One Luber MO (tradename)" manufactured by Kyodo Yushi Co., Ltd.] was applied to the sliding surface before the test. |
| Mating member: | High carbon-chromium bearing steel (SUJ2: JIS G 4805) |

**[Table 2]**

| | Examples | | | | |
|---|---|---|---|---|---|
| | 1 | 2 | 3 | 4 | 5 |
| Component Composition: | | | | | |
| PTFE | 73 | 67.5 | 63 | 73 | 67.5 |
| Barium sulfate | 10 | 15 | 10 | 10 | 15 |
| · Type | screened | screened | screened | sedimentary | sedimentary |
| Heavy magnesium silicate | 4 | 4 | 4 | 4 | 4 |
| · SiO₂/MgO | 2.2 | 2.2 | 2.2 | 2.2 | 2.2 |

| Phosphate: | | | | | |
|---|---|---|---|---|---|
| · Magnesium metaphosphate | 12 | 12 | | | 12 |
| · Calcium pyrophosphate | | | 12 | | |
| · Magnesium pyrophosphate | | | | 12 | |

| Titanium oxide | | | | | |
|---|---|---|---|---|---|
| · Anatase-type | 1.0 | 1.5 | 1.0 | 1.0 | 1.5 |

| Various Characteristics: | | | | | |
|---|---|---|---|---|---|
| Coefficient of friction (× 10⁻²) | 8-11 | 8-12 | 8-11 | 9-12 | 9 - 11 |
| Amount of wear (µm) | 30 | 32 | 30 | 30 | 32 |

**[Table 3]**

| | Examples | | | | |
|---|---|---|---|---|---|
| | 6 | 7 | 8 | 9 | 10 |
| Component Composition: | | | | | |
| PTFE | 72.5 | 67.0 | 72.0 | 67.5 | 63.0 |
| Barium sulfate | 10 | 15 | 10 | 10 | 15 |
| · Type | screened | screened | sedimentary | screened | sedimentary |
| Heavy magnesium silicate · SiO₂/MgO | 4 | 4 | 4 | 4 | 4 |
| | 2.2 | 2.2 | 2.2 | 2.2 | 2.2 |

| Phosphate: | | | | | |
|---|---|---|---|---|---|
| · Magnesium metaphosphate | 12 | | | 12 | |
| · Calcium pyrophosphate | | 12 | | | 12 |
| · Magnesium pyrophosphate | | | 12 | | |

| Titanium oxide | | | | | |
|---|---|---|---|---|---|
| · Anatase-type | 1.0 | 1.5 | 1.0 | 1.0 | 1.0 |

| Solid lubricant | | | | | |
|---|---|---|---|---|---|
| · Graphite | 0.5 | 0.5 | | 0.5 | |
| · Molybdenum disulfide | | | 1.0 | | |
| Low molecular weight PTFE | | | | 5.0 | 5.0 |

| Various Characteristics: | | | | | |
|---|---|---|---|---|---|
| Coefficient of friction (× 10⁻²) | 6 - 11 | 8 - 1 | 8-12 | 6-8 | 6-8 |
| Amount of wear (µm) | 20 | 21 | 23 | 18 | 22 |

**[Table 4]**

| | Comparative Examples | | |
|---|---|---|---|
| | 1 | 2 | 3 |
| Component Composition: | | | |
| PTFE | 80 | 50 | 73 |
| Barium sulfate | | 15 | 10 |
| · Type | | screened | screened |
| Heavy magnesium silicate | | 15 | 7 |
| · SiO₂/MgO | | 2.2 | 2.2 |
| Lead | 20 | 20 | |

| Phosphate: | | | |
|---|---|---|---|
| · Magnesium metaphosphate | | | 10 |

| Various Characteristics: | | | |
|---|---|---|---|
| Coefficient of friction (× 10⁻²) | 12 - 16 | 8 - 10 | 8 - 10 |
| Amount of wear (µm) | 72 | 31 | 36 |

From the above-described test results, if comparison is made between the multilayered sliding members of Examples 1 to 10 and the multilayered sliding members of Comparative Examples 1 to 3, the both exhibited practically equal performance with respect to the coefficient of friction, but the multilayered sliding members of Examples exhibited less amounts of friction, and thus it can be understood that the multilayered sliding members of Examples excel in the wear resistance.

Next, a description will be given of a rack guide in a rack-and-pinion type steering apparatus using the above-described multilayered sliding member.

In Figs. 2 to 4, a rack-and-pinion type steering apparatus 1 is comprised of a gear case 3 made of aluminum or an aluminum alloy and having a hollow portion 2; a steering shaft 6 rotatably supported by the gear case 3 through rolling bearings 4 and 5; a pinion 7 which is disposed in the hollow portion 2 and is provided integrally on a shaft end portion (pinion shaft) of the steering shaft 6; a rack bar 9 on which rack teeth 8 meshing with the pinion 7 are formed; a rack guide 10 which is disposed in the hollow portion 2 inside the gear case 3 and supports the rack bar 9 slidably; and a coil spring 11 for pressing the rack guide 10 toward the rack bar 9.

The gear case 3 has a cylindrical portion 12, and the rack bar 9, which is passed through the gear case 3 in an orthogonal direction to the axis of the steering shaft 6 and is disposed movably in that orthogonal direction, has a circular arc-shaped outer peripheral surface 13 on its rear surface side opposing its surface where the rack teeth 8 are formed.

The rack guide 10 is constituted by a rack guide base body 17 which has a circular arc-shaped recessed surface 14 and has a recess 15 and a circular hole 16 formed in the center of a bottom portion of the circular arc-shaped recessed surface 14 and communicating with the recess 15, and which is formed of one of aluminum or an aluminum alloy, zinc or a zinc alloy, and an iron-based sintered metal; and a curved sliding plate piece 21 which has a circular arc-shaped recessed surface 18 of a shape complementary to that of the circular arc-shaped recessed surface 14 as well as a hollow cylindrical projecting portion 20 which is formed in the center of the bottom portion of the recessed surface 18 in such a manner as to extend from the bottom portion toward the backing plate side, and on which a distal end closure portion 19 serving as a reinforcing portion is integrally formed, the curved sliding plate piece 21 being secured to the rack guide base body 17 so as to be closely seated on the circular arc-shaped recessed surface 14 as the projecting portion 20 is fitted and secured to the hole 16 constituted by a through hole. As shown in Fig. 1, as the sliding plate piece 21, a multilayered sliding member 51 is used which has the backing plate 52 formed of a steel plate; the porous metal sintered layer 53 formed integrally on the surface of the backing plate 52; and the sliding layer 54 constituted of a synthetic resin composition filling the pores of, and coating the surface of, the porous metal sintered layer 53, the synthetic resin composition being composed of 5 to 30% by weight of a barium sulfate, 1 to 15% by weight of a magnesium silicate, 1 to 25% by weight of a phosphate, 0.5 to 3% by weight of a titanium oxide, and the balance of a polytetrafluoroethylene resin. The sliding plate piece 21 serving as the multilayered sliding member 51 has on its sliding layer 54 the recessed surface 18 which slidably abuts against an outer peripheral surface of the rack bar 9, i.e., against the illustrated circular arc-shaped outer peripheral surface 13 in this embodiment, so as to slidably support the rack bar 9. The rack guide base body 17 at its cylindrical outer peripheral surface 22 is slidably in contact with an inner peripheral surface 23 of the cylindrical portion 12 of the gear case 3 with a sliding clearance, whereby the rack guide 10 is movable in the direction orthogonal to the axis of the steering shaft 6.

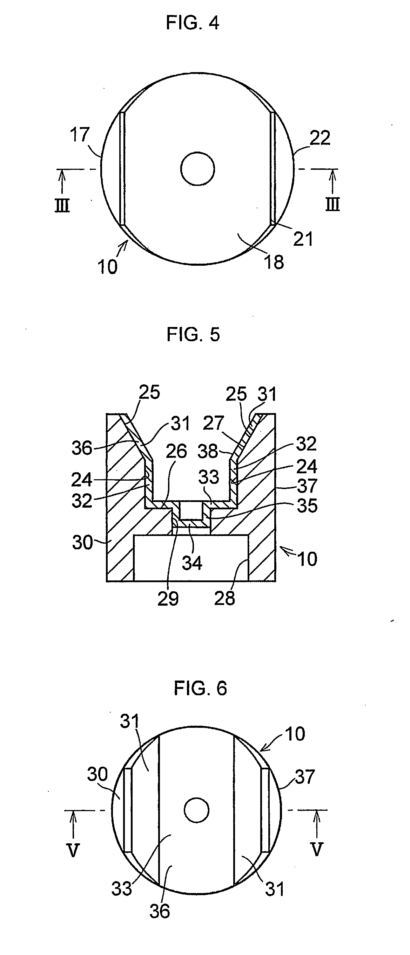

The rack guide 10 in Figs. 5 and 6, which illustrate another example of the rack guide which can be used for the rack-and-pinion type steering apparatus 1, is constituted by a rack guide base body 30 which has on one axial end side a recessed surface 27 including a mutually opposing pair of flat surfaces 24, a pair of inclined surfaces 25 respectively extending integrally from the pair of flat surfaces 24 in a mutually opposing manner, and a bottom flat surface 26 extending integrally from the pair of flat surfaces 24, has on the other axial end side a recess 28, and has a circular hole 29 formed in the center of a bottom portion of the recessed surface 27, the rack guide base body 30 being formed of one of aluminum or an aluminum alloy, zinc or a zinc alloy, and an iron-based sintered metal; and a sliding plate piece 36 which has a mutually opposing pair of inclined surface portions 31, a pair of flat surface portions 32 respectively continuous from the inclined surface portions 31, a bottom surface portion 33 continuous to each of the flat surface portions 32, and a hollow cylindrical projecting portion 35 which is formed in the center of the bottom surface portion 33 in such a manner as to extend toward the backing plate side, and on which a distal end closure portion 34 serving as a reinforcing portion is integrally formed, the sliding plate piece 36 being secured to the rack guide base body 30 so as to be seated on the recessed surface 27 as the projecting portion 35 is fitted and secured to the hole 29. A recessed surface 38 is formed by outer exposed surfaces of the pair of inclined surface portions 31, the pair of flat surface portions 32, and the bottom surface portion 33, and the above-described multilayered sliding member 51 is used as the sliding plate piece 36. The sliding plate piece 36 serving as the multilayered sliding member 51 has on its sliding layer 54 the recessed surface 38 which slidably abuts against an outer peripheral surface of the rack bar 9, i.e., against an outer peripheral surface (not shown) of a shape complementary to that of the recessed surface 38 in this embodiment, so as to slidably support the rack bar 9. The rack guide base body 30 at its cylindrical outer peripheral surface 37 is slidably in contact with the inner peripheral surface 23 of the cylindrical portion 12 of the gear case 3 with a sliding clearance, whereby the rack guide 10 is movable in the direction orthogonal to the axis of the steering shaft 6.

With the above-described rack-and-pinion type steering apparatus 1, in the rotation of the steering shaft 6, the rack guide 10 ensures the meshing of the rack teeth 8 with the pinion 7 and guides the movement of the rack bar 9 in the direction orthogonal to the axis of the steering shaft 6 on the basis of the meshing.

The multilayered sliding member in accordance with the present invention showed more excellent friction and wear characteristics, particularly the wear resistance, than the conventional multilayered sliding members containing lead i.e., a substance of environmental concern, as a filler for the PTFE. In addition, in the case where the multilayered sliding member excelling in the friction and wear characteristics is applied to the sliding plate piece of the rack guide, excellent friction and wear characteristics are similarly exhibited, thereby making it possible to ensure smooth sliding of the rack bar over extended periods of time.

## Claims

1. A multilayered sliding member (51) comprising: a backing plate (52) formed of a steel plate; a porous metal sintered layer (53) formed integrally on a surface of said backing plate (52); and a sliding layer (54) constituted of a synthetic resin composition filling pores of, and coating a surface of, said porous metal sintered layer (53), said synthetic resin composition being composed of 5 to 30% by weight of a barium sulfate, 1 to 15% by weight of a magnesium silicate, 1 to 25% by weight of a phosphate, 0.5 to 3% by weight of an anatase-type titanium oxide, and the balance of a polytetrafluoroethylene resin.

2. The multilayered sliding member (51) according to claim 1, wherein said anatase-type titanium oxide exhibits a Mohs hardness of 5.5 to 6.0.

3. The multilayered sliding member (51) according to claim 1 or 2, wherein said synthetic resin composition contains as an additional component 0.1 to 2% by weight of a solid lubricant selected from the group of graphite, molybdenum disulfide, tungsten disulfide, and boron nitride.

4. The multilayered sliding member (51) according to any one of claims 1 to 3, wherein said synthetic resin composition contains 1 to 10% by weight of a low molecular weight polytetrafluoroethylene as an additional component.

5. A rack guide (10) for slidably supporting a rack bar (9) in a rack-and-pinion type steering apparatus (1) which includes a gear case (3), a pinion (7) supported rotatably by said gear case (3), a rack bar (9) on which rack teeth (8) meshing with said pinion (7) are formed, and a spring (11) for pressing said rack guide (10) toward said rack bar (9), the rack guide (10), comprising: a rack guide base body (17) having a cylindrical outer peripheral surface (22) which is slidably brought into contact with a cylindrical inner peripheral surface (23) of said gear case (3); and said multilayered sliding member (51) according to any one of claims 1 to 4 which is secured on a backing plate (52) side thereof to said rack guide base body (17), wherein said multilayered sliding member (51) has on said sliding layer (54) a recessed surface (18) which is slidably brought into sliding contact with an outer peripheral surface (13) of said rack bar (9) so as to slidably support said rack bar (9).

6. The rack guide according to claim 5, wherein said rack guide base body (17) has a circular arc-shaped recessed surface (14) and has a through hole (16) in a center of a bottom portion of the circular arc-shaped recessed surface (14).

7. The rack guide according to claim 5 or 6, wherein said multilayered sliding member (51) has a circular arc-shaped recessed surface (18) on said sliding layer (54) thereof, and has a hollow cylindrical projecting portion (20) which is formed in a center of a bottom portion of the circular arc-shaped recessed surface (18) in such a manner as to extend from said bottom portion toward the backing plate side.

8. The rack guide according to claim 5, wherein said rack guide base body (30) has a recessed surface (27) including a mutually opposing pair of flat surfaces (24), a pair of inclined surfaces (25) respectively extending from the pair of flat surfaces (24) in a mutually opposing manner, and a bottom flat surface (26) extending integrally from the pair of flat surfaces (24), and has a through hole (29) formed in a center of a bottom portion of the recessed surface (27).

9. The rack guide according to claim 5 or 8, wherein said multilayered sliding member (51) has a mutually opposing pair of inclined surface portions (31), a pair of flat surface portions (32) respectively continuous from the inclined surface portions (31), and a bottom surface portion (33) continuous to each of the flat surface portions (32), and has a hollow cylindrical projecting portion (35) which is formed in a center of the bottom surface portion (33) in such a manner as to extend toward the backing plate side.

10. A rack-and-pinion type steering apparatus (1) including a gear case (3), a pinion (7) supported rotatably by said gear case (3), a rack bar (9) on which rack teeth (8) meshing with said pinion (7) are formed, the rack guide (10) of any of claims 5-9 for slidably supporting said rack bar (9), and a spring (11) for pressing said rack guide (10) toward said rack bar (9).

## Patentansprüche

1. Mehrschichtiges Gleitelement (51), umfassend: eine aus einer Stahlplatte gebildete Stützplatte (52); eine an einer Fläche der Stützplatte (52) angeformte poröse Sintermetallschicht (53); und eine Gleitschicht (54), die aus einer Kunstharzzusammensetzung gebildet ist, welche die Poren der porösen Sintermetallschicht (53) füllt und eine Fläche derselben beschichtet, wobei die Kunstharzzusammensetzung aus 5 bis 30 Gew.-% eines Bariumsulfats, 1 bis 15 Gew.-% eines Magnesiumsilikats, 1 bis 25 Gew.-% eines Phosphats, 0,5 bis 3 Gew.-% eines Titanoxids der Anatas-Modifikation und als Rest einem Polytetrafluorethylenharz zusammengesetzt ist.

2. Mehrschichtiges Gleitelement (51) nach Anspruch 1, wobei das Titanoxid der Anatas-Modifikation eine Mohshärte von 5,5 bis 6,0 aufweist.

3. Mehrschichtiges Gleitelement (51) nach Anspruch 1 oder 2, wobei die Kunstharzzusammensetzung als zusätzliche Komponente 0,1 bis 2 Gew.-% eines aus der Gruppe von Graphit, Molybdändisulfid, Wolframdisulfid und Bornitrid gewählten festen Gleitmittels beinhaltet.

4. Mehrschichtiges Gleitelement (51) nach einem der Ansprüche 1 bis 3, wobei die Kunstharzzusammensetzung 1 bis 10 Gew.-% eines Polytetrafluorethylens mit geringem Molekulargewicht als zusätzliche Komponente umfasst.

5. Zahnstangenführung (10) zum gleitenden Lagern einer Zahnstange (9) in einer Zahnstangenlenkvorrichtung (1), die ein Getriebegehäuse (3), ein mittels des Getriebegehäuses (3) drehbar gelagertes Ritzel (7), eine Zahnstange (9), an der das Ritzel (7) kämmende Stangenzähne (8) ausgebildet sind, und eine Feder (11) zum Pressen der Zahnstangenführung (10) in Richtung der Zahnstange (9) umfasst, wobei die Zahnstangenführung (10) Folgendes umfasst: einen Zahnstangenführungsgrundkörper (17) mit einer zylindrischen Außenumfangsfläche (22), die in Gleitkontakt mit einer zylindrischen Innenumfangsfläche (23) des Getriebegehäuses (3) gebracht ist; und das mehrschichtige Gleitelement (51) nach einem der Ansprüche 1 bis 4, welches auf einer Stützplattenseite (52) desselben an dem Zahnstangenführungsgrundkörper (17) befestigt ist, wobei das mehrschichtige Gleitelement (51) an der Gleitschicht (54) eine vertiefte Fläche (18) aufweist, die gleitend in Gleitkontakt mit einer Außenumfangsfläche (13) der Zahnstange (9) gebracht ist, um die Zahnstange (9) gleitend zu lagern.

6. Zahnstangenführung nach Anspruch 5, wobei der Zahnstangenführungsgrundkörper (17) eine kreisrunde, bogenförmige vertiefte Fläche (14) aufweist und eine Durchtrittsöffnung (16) in einer Mitte eines unteren Abschnitts der kreisrunden bogenförmigen vertieften Fläche (14) aufweist.

7. Zahnstangenführung nach Anspruch 5 oder 6, wobei das mehrschichtige Gleitelement (51) eine kreisrunde bogenförmige vertiefte Fläche (18) auf dessen Gleitschicht (54) aufweist, und einen hohlen zylindrischen hervorstehenden Abschnitt (20) aufweist, der in einer Mitte eines unteren Abschnitts der kreisrunden bogenförmigen vertieften Fläche (18) ausgebildet ist, derart, dass er sich von dem unteren Abschnitt zur Stützplattenseite erstreckt.

8. Zahnstangenführung nach Anspruch 5, wobei der Zahnstangenführungsgrundkörper (30) eine vertiefte Fläche (27) mit einem sich gegenüberliegenden Paar von flachen Flächen (24), einem Paar von geneigten Flächen (25), die sich einander gegenüberliegend von dem Paar von flachen Flächen (24) erstrecken, und einer flachen unteren Fläche (26), die sich einstückig von dem Paar von flachen Flächen (24) erstreckt, aufweist, und eine in einer Mitte eines unteren Abschnitts der vertieften Fläche (27) gebildete Durchtrittsöffnung (29) aufweist.

9. Zahnstangenführung nach Anspruch 5 oder 8, wobei das mehrschichtige Gleitelement (51) ein sich gegenüberliegendes Paar von geneigten Flächenabschnitten (31), ein Paar von jeweils von den geneigten Flächenabschnitten (31) fortlaufenden flachen Flächenabschnitten (32) und einen zu jedem der flachen Flächenabschnitte (32) fortlaufenden unteren Flächenabschnitt (33) aufweist und einen hohlen zylindrischen hervorstehenden Abschnitt (35) aufweist, der in einer Mitte des unteren Flächenabschnitts (33) ausgebildet ist, derart, dass er sich zur Stützplattenseite erstreckt.

10. Eine Zahnstangenlenkungsvorrichtung (1) mit einem Getriebegehäuse (3), einem mittels des Getriebegehäuses (3) drehbar gelagerten Ritzel (7), einer Zahnstange (9), an der das Ritzel (7) kämmende Stangenzähne (8) ausgebildet sind, der Zahnstangenführung (10) nach einem der Ansprüche 5 bis 9 zum gleitenden Lagern der Zahnstange (9) und einer Feder (11) zum Pressen der Zahnstangenführung (10) in Richtung der Zahnstange (9).

## Revendications

1. Elément glissant multicouche (51) comprenant : une plaque de support (52) formée à partir d'une plaque en acier ; une couche frittée en métal poreux (53) formée d'un seul tenant sur une surface de ladite plaque de support (52) ; et une couche glissante (54) constituée d'une composition de résine synthétique remplissant les pores, et recouvrant une surface, de ladite couche frittée en métal poreux (53), ladite composition de résine synthétique étant composée de 5 à 30 % en poids d'un sulfate de baryum, de 1 à 15 % en poids d'un silicate de magnésium, de 1 à 25 % en poids d'un phosphate, de 0,5 à 3 % en poids d'un oxyde de titane du type anatase, le complément étant composé d'une résine polytétrafluoroéthylène.

2. Elément glissant multicouche (51) selon la revendication 1, dans lequel ledit oxyde de titane du type anatase présente une dureté de Mohs de 5,5 à 6,0.

3. Elément glissant multicouche (51) selon la revendication 1 ou 2, dans lequel ladite composition de résine synthétique contient, en tant que composant additionnel, de 0,1 à 2 % en poids d'un lubrifiant solide sélectionné dans le groupe comprenant le graphite, le bisulfure de molybdène, le bisulfure de tungstène et le nitrure de bore.

4. Elément glissant multicouche (51) selon l'une quelconque des revendications 1 à 3, dans lequel ladite composition de résine synthétique contient de 1 à 10 % en poids d'un polytétrafluoroéthylène de bas poids moléculaire en tant que composant additionnel.

5. Guide de crémaillère (10) pour supporter de façon glissante une barre de crémaillère (9) dans un dispositif de direction du type à crémaillère (1) qui comprend un carter d'engrenage (3), un pignon (7) supporté à rotation par ledit carter d'engrenage (3), une barre de crémaillère (9) sur laquelle sont formées des dents de crémaillère (8) engrenant avec ledit pignon (7), et un ressort (11) pour pousser ledit guide de crémaillère (10) vers ladite barre de crémaillère (9), le guide de crémaillère (10) comprenant : un corps de base de guide de crémaillère (17) ayant une surface périphérique extérieure cylindrique (22) qui est mise en contact glissant avec une surface périphérique intérieure cylindrique (23) dudit carter d'engrenage (3) ; et ledit élément glissant multicouche (51) selon l'une quelconque des revendications 1 à 4, qui est fixé, d'un côté plaque de support (52) de celui-ci, audit corps de base de guide de crémaillère (17), dans lequel ledit élément glissant multicouche (51) a sur ladite couche glissante (54) une surface en retrait (18) qui est mise, de façon glissante, en contact glissant avec une surface périphérique extérieure (13) de ladite barre de crémaillère (9) afin de supporter de façon glissante ladite barre de crémaillère (9).

6. Guide de crémaillère selon la revendication 5, dans lequel ledit corps de base de guide de crémaillère (17) a une surface en retrait en forme d'arc de cercle (14) et comporte un trou traversant (16) au centre d'une partie inférieure de la surface en retrait en forme d'arc de cercle (14).

7. Guide de crémaillère selon la revendication 5 ou 6, dans lequel ledit élément glissant multicouche (51) a une surface en retrait en forme d'arc de cercle (18) sur sa couche glissante (54), et comporte une partie saillante cylindrique creuse (20) qui est formée au centre d'une partie inférieure de la surface en retrait en forme d'arc de cercle (18) de manière telle qu'elle s'étend de ladite partie inférieure vers le côté plaque de support.

8. Guide de crémaillère selon la revendication 5, dans lequel ledit corps de base de guide de crémaillère (30) a une surface en retrait (27) comprenant une paire de surfaces plates mutuellement opposées (24), une paire de surfaces inclinées (25) s'étendant respectivement depuis la paire de surfaces plates (24) de manière mutuellement opposée, et une surface plate inférieure (26) s'étendant d'un seul tenant depuis la paire de surfaces plates (24), et comporte un trou traversant (29) formé au centre d'une partie inférieure de la surface en retrait (27).

9. Guide de crémaillère selon la revendication 5 ou 8, dans lequel ledit élément glissant multicouche (51) comporte une paire de parties de surface inclinée mutuellement opposées (31), une paire de parties de surface plate (32) respectivement continues depuis les parties de surface inclinée (31), et une partie de surface inférieure (33) continue avec chacune des parties de surface plate (32), et comporte une partie saillante cylindrique creuse (35) qui est formée au centre de la partie de surface inférieure (33) de manière telle qu'elle s'étend vers le côté plaque de support.

10. Dispositif de direction du type à crémaillère (1) comprenant un carter d'engrenage (3), un pignon (7) supporté à rotation par ledit carter d'engrenage (3), une barre de crémaillère (9) sur laquelle sont formées des dents de crémaillère (8) engrenant avec ledit pignon (7), le guide de crémaillère (10) selon l'une quelconque des revendications 5 à 9 pour supporter ladite barre de crémaillère (9), et un ressort (11) pour pousser ledit guide de crémaillère (10) vers ladite barre de crémaillère (9).
